# EUROPÄISCHE PATENTANMELDUNG

(11) **EP 3 015 575 A1**
(43) Veröffentlichungstag der Anmeldung: **04.05.2016**
(21) Anmeldenummer: 14191216.2
(22) Anmeldetag: 31.10.2014
(51) Int. Cl.: D01F 6/12, D01F 1/10, F16L 15/04

(54) **Dichtungsmaterial für Gewindeverbindungen**

(71) Anmelder: Bachmair, Josef, 4841 Ungenach (AT); Seiringer, Josef, 4841 Ungenach (AT)
(72) Erfinder: Bachmair, Josef, 4841 Ungenach (AT); Seiringer, Josef, 4841 Ungenach (AT)

(57) **Zusammenfassung**

Es wird ein Dichtungsmaterial für Gewindeverbindungen aus einem insbesondere band- oder fadenförmigen PTFE-Mono- oder Multifilament vorgeschlagen. Zur Schaffung vorteilhafter Dichtungsverhältnisse besteht das Filament aus einem mit Hochdruckadditiven modifizierten, unverstreckten PTFE, das in Band- oder Fadenform vorliegt.

## Beschreibung

Die Erfindung bezieht sich auf ein Dichtungsmaterial für Gewindeverbindungen aus einem insbesondere band- oder fadenförmigen PTFE- Mono- oder Multifilament.

Derartige Dichtelemente, insbesondere Dichtbänder oder Dichtfäden dienen als Dichtungen für verschiedenste Anschlüsse, für Rohrverbindungen bzw. zur Abdichtung von Gewinden aus Metall oder Kunststoff. Dazu werden Polytetrafluorethylenfäden bzw. -bänder um die abzudichtenden Gewindegänge gewickelt, bevor die Gewindeverbindung verschraubt wird. Solche Dichtelemente dienen als Ersatz für in der Vergangenheit zum Abdichten von Gewinden bei Rohrleitungen verwendete Hanffäden. Sie werden derzeit in verschiedensten Formen, wie eben als Dichtbänder bzw. Dichtfäden, verwendet. Die am Markt befindlichen Dichtbänder sind immer ein PTFE-Monofilament in verstreckter Form, das meist an der Oberfläche mit perfluoriertem Gleitmittel ausgestattet ist oder der Auftrag eines solchen an der Oberfläche erfolgen muss.

Es ist bekannt, dass es beim Verschrauben von Gewindeverbindungen oft un-um-gänglich ist, diese Verschraubung aufgrund von erforderlichen Nachjustierungen entsprechend wieder öffnen und erneut anziehen zu müssen. Voraussetzung dafür ist jedoch eine garantierte Dichtheit der Verbindung während und auch nach diesem Vorgang. Eben dies kann mit den derzeit am Markt befindlichen Produkten aus PTFE-Monofilament nur bedingt mit dem gesonderten Auftrag von perfluoriertem Gleitmittel auf das PTFE-Monofilament gewährleistet werden. Andernfalls ist nach einem Lösen der Verschraubung auch stets das Dichtelement zu ersetzen, um die geforderte Dichtheit sicherzustellen.

Ausgehend von einem derzeitigen Stand der Technik liegt der Erfindung die Aufgabe zugrunde, ein Dichtelement zu schaffen, das verbesserte Dichteigenschaften aufweist und ein Nachjustieren einer Verschraubung in gewissen Bereichen auch unter Druck erlaubt, ohne das Dichtmittel unmittelbar wieder ersetzen zu müssen.

Die Erfindung löst diese Aufgabe dadurch, dass das Filament aus einem mit Hoch-druckadditiven modifizierten, unverstreckten PTFE besteht, das in Band- oder Fadenform vorliegt.

Hochdruckadditive liegen als feinteiliges Pulver vor und werden als struktur-, chemisch- oder physikalisch wirksame Stoffe eingeteilt. Zu den gängigsten Hochdruckadditiven zählen Molybdändisulfid, Graphit, Tricalciumphosphat, Zinkpyrophosphat, Calciumhydroxid, Aluminium, Zinksulfid, Zinkoxid und Calciumfluorid. Ebenso ist der Einsatz von Titandioxid als Hochdruckadditiv möglich, was den Vorteil der Einsetzbarkeit in der Lebensmittelindustrie bietet.

PTFE weist zwar selbst einen sehr geringen Reibungskoeffizienten auf, verfügt jedoch über keine Schichtgitterstruktur und ist nur physikalisch wirksam. Eine Modifizierung von PTFE mit Hochdruckadditiven, welche eine Schichtgitterstruktur aufweisen und auch chemisch wirksam sind, ist daher für den Einsatz als Gewindedichtfaden besonders vorteilhaft. Dafür bieten sich besonders Molybdändisulfid (MoS₂), Tungsten Disulfide (WS₂), Titandioxid (TiO2), Gemische davon oder artgleiche Hochdruckadditiven an.

Der wesentliche Vorteil des erfindungsgemäßen Dichtmaterials liegt darin, dass Nachjustierungen der Verschraubung nach einer Montage auch unter Druck noch möglich sind. Insbesondere ist es möglich, eine nach dem aufwickeln des Dichtmaterials festgezogene Verschraubung um wenigstens eine Viertelumdrehung zu lösen, ohne dabei die Dichtheit aufs Spiel zu setzen. Dadurch, dass das unverstreckte PTFE-Monofilament mit Hochdruckadditiven modifiziert ist ergibt sich ein verbesserter Kompressionswiderstand gegen Verformungen.

Die Wirkungsweise von Hochdruckadditiven beruht auf deren kristallischen Aufbau, der sie dazu befähigt eine Schmierwirkung ohne Veränderung der metallischen Oberfläche zu entfalten. Schichtgitterkristalle mit ihrer Struktur sind gewöhnlich in einer Ebene deutlich leichter spaltbar, die Lamellen gleiten so übereinander wie ein Stapel Papier. Diese innere Gleitfähigkeit ist von wesentlicher Bedeutung für die Schmierfähigkeit. Es bildet sich also unter zunehmendem Druck zwischen den Metalloberflächen ein Gleitfilm, welcher das Festfressen verhindert.

Vorteilhaft ist es, wenn 0,1 bis 5,0 Vol% des Filaments Hochdruckadditive sind. Bereits ein Zusatz von 0,1 % an Hochdruckadditiven bringt deutliche Verbesserungen der Materialeigenschaften, Zusätze über 5,0 % sind weder wirtschaftlich noch sinnvoll.

Ein wesentlicher Vorteil der Erfindung liegt darin, dass die mit Hochdruckadditiven modifizierte, unverstreckte PTFE-Folie die geforderten verbesserten Dichteigen-schaften aufweist und ein Nachjustieren einer Verschraubung in gewissen Berei-chen auch unter Druck erlaubt, ohne das Dichtmittel zu beschädigen. Dieser Vorteil ist im Wesentlichen darauf zurückzuführen, dass durch Einbringen von Hochdruckadditiven in das Polymer der nachteilige Kaltfluss von PTFE gesteuert werden kann. Zugleich dienen Hochdruckadditive als Trockenschmiermittel, was ein zusätzliches Aufbringen von perfluoriertem Gleitmittel ersetzt. Das Dichtelement kann in beliebiger Form, aber insbesondere als formunabhängiges, universell einsetzbares Dichtelement, insbesondere als Dichtband oder Dichtfaden in beliebiger Breite und Dicke vorgesehen sein. Entsprechende Versuche mit für die genannten Dichtzwecke hergestellten PTFE-Folien bzw. aus diesen Folien geschnittenen Dichtbändern oder Dichtfäden aus unverstrecktem, mit Hochdruckadditiven modifizierten PTFE und ohne perfluoriertem Gleitmittel zeigen bei sehr guter Verarbeitbarkeit hervorragende Ergebnisse. Getestet wurde die beschriebene Folie sowohl in Band- als auch in Fadenform bei Drücken bis zu 200 bar und darüber an unterschiedlichsten Gewinde- und Materialarten.

Vorteilhaft ist es, wenn die unverstreckte PTFE-Folie mit einer Materialdichte von 1,20 bis 1,80 g/cm³, insbesondere 1,50 bis 1,70g/cm³, die geforderten verbesserten Dichteigenschaften aufweist und ein Nachjustieren einer Verschraubung in gewissen Bereichen erlaubt, ohne das Dichtmittel zu beschädigen.

Reines Polytetraflourethylen weist seine bekannten Vorzüge wie hervorragende chemische Beständigkeit, einen sehr niedrigen Gleitreibungskoeffizient, einen Temperatureinsatzbereich von -200 °C bis 260 °C, keine Wasseraufnahme, nicht aushärtend u. dgl. auf und eignet sich grundsätzlich in der vorgeschlagenen, unverstreckten Form, sehr gut für den Einsatz als Gewindedichtmaterial. Ein erheblicher Nachteil dieses Materials liegt jedoch im Kaltfluss, welcher ohne Einbringen von Hochdruckadditiven in das PTFE Polymer nur ein Nachjustieren in minimalen Bereichen erlaubt. Die erforderliche Dichtheit kann dabei nur bedingt gewährleistet werden. Ebenso besteht beim Aufbringen hoher Drehmomente, welche bei der Verschraubung von Gewindeverbindungen unumgänglich sind, die Gefahr des Verreibens der Dichtflächen. Eine besondere Gefährdung bezüglich Verreiben von Dichtflächen liegt bei Gewindeverbindungen aus Edelstahl vor.

Die Herstellung der unverstreckten PTFE-Folie erfolgt durch kalandrieren. Bei der Produktion des erfindungsgemäßen Dichtmittels verflüchtigt sich jegliches, zur Produktion gegebenenfalls erforderliche Gleitmittel beim Trockenprozess nach dem Kalandrieren. Im Gegensatz zum Stand der Technik erfolgt kein Verstrecken der mittels Kalandrierprozess gefertigten Folienbahn vor einer Weiterverarbeitung zu den Dichtbändern bzw. Dichtfäden und auch kein neuerliches Aufbringen von Gleitmittel, wie dies im Stand der Technik insbesondere nach einem Verstrecken der Folie der Fall ist. Die Monofilamentoberfläche ist also gleitmittelfrei, was in diesem Zusammenhang bedeutet ohne Auftrag einer gesonderten Gleitmittelschicht. Herkömmliche, am Markt erhältliche PTFE Gewindedichtfäden bzw. -bänder sind immer verstreckt und zusätzlich noch mit Gleitmittel versehen.

Zur wesentlichen Verbesserung des Kaltflusses von PTFE, was in weiterer Folge ein weiteres Verdrehen der Verschraubung auch unter Druck erlaubt, sind die Hochdruckadditive in die PTFE Matrix z.B. als Trockenschmiermittel eingebettet. Somit wird eine weitere Alternative zu den verstreckten und mit perfluorierten Gleitmitteln versehenen Dichtbändern und Fäden geschaffen, bei denen das Gleitmittel lediglich auf der Oberfläche aufgetragen ist. Durch die Einarbeitung von Hochdruckadditiven direkt in das PTFE-Polymer bei der Verarbeitung lässt sich eine homogene Verteilung erzielen. Hochdruckadditive eignen sich perfekt als Trockenschmiermittel, für Anwendungen die den Einsatz von Fetten oder Ölen verbieten und sind somit auch für Anwendungen in Sauerstoffleitungen zugelassen. Ein Vorteil des Einbringens der genannten Additive in das PTFE-Polymer gegenüber dem Auftrag von Gleitmitteln auf die Oberfläche besteht in der ständig verfügbaren Schmiereigenschaft, da die Partikel eben in der PTFE-Matrix eingebettet sind und sich nicht verflüchtigen können. Ein auf die Oberflächen von PTFE-Dichtbändern und Dichtfäden aufgebrachtes Gleitmittel kann sich hingegen relativ leicht verflüchtigen.

Zur Verbesserung der Geschmeidigkeit beim Umwickeln eines abzudichtenden Gewindes kann es von Vorteil sein, die Folie zu perforieren. Dies bedeutet, dass die Folie bzw. das Dichtband oder der Dichtfaden quer zu seiner Längsrichtung, beispielsweise durch Nadeln perforiert wird. Ebenso kann eine Prägung in Rillenform das Aufbringen der Folie bzw. das Eindringen in die Gewindegänge und somit die Dichtwirkung optimieren. Die Rille erstreckt sich dabei vorzugsweise über den Querschnitt und ist in Monofilamentrichtung ausgerichtet.

## Patentansprüche

1. Dichtungsmaterial für Gewindeverbindungen aus einem insbesondere band- oder fadenförmigen PTFE-Mono- oder Multifilament, **dadurch gekennzeichnet, dass** das Filament aus einem mit Hochdruckadditiven modifizierten, unverstreckten PTFE besteht, das in Band- oder Fadenform vorliegt.

2. Dichtungsmaterial nach Anspruch 1, **dadurch gekennzeichnet, dass** 0,1 bis 5,0 Vol% des Filaments Hochdruckadditive sind.

3. Dichtungsmaterial nach Anspruch 1 oder 2, **dadurch gekennzeichnet, dass** die Hochdruckadditive aus der Gruppe Molybdänsulfid (MoS2), Tungsten Disulfide (WS2), Titandioxid (TiO2) ausgewählt sind oder aus Gemischen davon bestehen.

4. Dichtungsmaterial nach einem der Ansprüche 1 bis 3, **dadurch gekennzeichnet, dass** das Filament ein unverstrecktes PTFE mit einer Materialdichte von 1,20 bis 1,80g/cm³ ist.

5. Dichtungsmaterial nach einem der Ansprüche 1 bis 4, **dadurch gekennzeichnet, dass** die Monofilamentoberfläche gleitmittelfrei ist.

6. Dichtungsmaterial nach einem der Ansprüche 1 bis 5, **dadurch gekennzeichnet, dass** das PTFE-Monofilament perforiert ist.

7. Dichtungsmaterial nach einem der Ansprüche 1 bis 6, **dadurch gekennzeichnet, dass** das PTFE-Monofilament wenigstens eine in Monofilamentlängsrichtung verlaufende Rille aufweist.
